# EUROPEAN PATENT SPECIFICATION

(11) **EP 3 329 471 B1**
(45) Date of publication and mention of the grant of the patent: **06.03.2024**
(21) Application number: 16751523.8
(22) Date of filing: 27.07.2016
(51) Int. Cl.: G07C 9/00, B60R 25/00

(54) **IMPROVEMENT TO IDENTITY CODE IDENTIFICATION IN POLLING IDENTIFICATION**
VERBESSERUNG AN EINER IDENTITÄTSCODEIDENTIFIKATION BEI EINER ABFRAGEIDENTIFIZIERUNG
AMÉLIORATION D'IDENTIFICATION DE CODE D'IDENTITÉ LORS D'UNE INTERROGATION PRÉALABLE D'IDENTIFICATION

(30) Priority: 27.07.2015 CN 201510445443
(43) Date of publication of application: 06.06.2018
(73) Proprietor: Valeo Comfort and Driving Assistance, 94000 Créteil (FR); Valeo Interior Controls (Shenzhen) Co., Ltd, 518128 Shenzhen (CN)
(72) Inventor: LECONTE, Eric, 94046 Créteil Cedex (FR); MARTIN, Gilles, 94046 Créteil Cedex (FR); SUN, Qianyu, Shenzhen Guangdong 518128 (CN)
(74) Representative: Delplanque, Arnaud
(86) International application number: PCT/EP2016/067965
(87) International publication number: WO 2017/017164

(56) References cited:
- US-A1- 2006 066 442
- US-A1- 2006 119 467
- US-A1- 2009 153 295
- US-A1- 2012 286 927

## Description

### Technical field

The present invention relates to a system for identifying an identity code (CID) in polling identification, and a method for identifying a CID in polling identification.

The system and method are used in particular in a PEPS system (Passive Entry and Passive Start, i.e. keyless entry and starting system) of a motor vehicle (e.g. a car, saloon or truck). Furthermore, CID refers to a vehicle's identity code, and corresponds to a smart key that corresponds to the vehicle of the identity code and is used for a PEPS system.

### Background art

A motor vehicle PEPS system is one of the most typical schemes in vehicle wireless entry applications. It employs wireless radio frequency technology and an identity code identification system to open and close a door lock automatically by means of a smart key carried by the vehicle owner. The driver can open the vehicle door and start the vehicle without pressing a remote control button on the smart key or inserting the key in a lock cylinder and withdrawing it therefrom.

In particular, the process of identifying the identity code is realized by way of a bidirectional identity code authentication process between the smart key and an antenna arranged in the vehicle.

Document US2006/0119467 A1 discloses a method and device for localization of a vehicle key inside or around a vehicle comprising two antennas located respectively, in the front part and rear part of the vehicle.

Document US2009/0153295 A1 discloses a system for locating a vehicle key. The system comprises two antennas with different overlapping ranges for locating the smart key inside or outside the vehicle.

Document US2012/0286927 A1 discloses a vehicle passive entry system, which receives an electromagnetic interrogation signal transmitted from an interrogation antenna to a remote transponder, wherein the interrogation signal includes a wakeup pattern data sequence. A plurality of channel signals is generated within the transponder from a corresponding plurality of antennas in response to the electromagnetic interrogation signal.

However, existing CID identification systems have problems.

First of all, a vehicle contains a large number of other electronic devices, which may cause interference to the CID identification system. In particular, electronic devices on the vehicle dashboard may generate various electronic signals, thereby causing electronic interference to the PEPS system. A traditional single RSSI (Received Signal Strength Indication) solution is to enhance the transmission power of the internal antenna to overcome noise from the dashboard. Such a solution causes a significant increase in power consumption; in particular, it will accelerate consumption of charge from the in-vehicle battery significantly when the vehicle is not running. Existing CID identification systems fail to reduce power consumption while overcoming noise interference from the dashboard.

Secondly, a conventional single RSSI solution fails to precisely determine the position of the smart key in the vehicle.

In view of the problems above, there is a need to propose an improved PEPS system that is capable of solving the problems above.

### Content of the invention

The present invention proposes a system according to independent claim 1 for CID identification in polling identification that is capable of overcoming the problems above, and a method according to independent claim 8 for identifying a CID in polling identification.

The present invention proposes a system which uses two RSSI mechanisms, and two different thresholds stored in a smart key, to realize the object of saving electric power, and can precisely determine the position of the smart key.

In the present invention, a transmission power of a first antenna in an RSSI mechanism in a first region of a vehicle (a part of the vehicle remote from the dashboard) is kept at a low level, to reduce power consumption; correspondingly, a corresponding first threshold stored in the smart key is also held at a low level. A transmission power of a second antenna in an RSSI mechanism in a second region of the vehicle (a part of the vehicle close to the dashboard) is increased, to achieve immunity from noise interference from the dashboard; correspondingly, a corresponding second threshold stored in the smart key is also kept at a high level.

In particular, in the present invention, the principal component which causes electronic interference to the CID identification system is the vehicle dashboard.

However, if other electronic interference components are present in the vehicle, the concept of the present invention can still be applied appropriately.

The smart key measures and receives a first/second strength indication signal transmitted by the first/second antenna, to obtain a first/second received strength indication signal value, wherein the first/second received strength signal value is different from the strength indication signal emitted by the first/second antenna, and the first/second received strength signal value is generally attenuated according to the distance between the antenna and the first/second antenna. Next, the smart key compares the first/second received strength indication signal value with the first/second threshold stored in the smart key, to determine the position of the smart key. In particular, if the second received strength indication signal value is greater than the second threshold, the smart key determines that it is close to the second region (a part of the vehicle close to the dashboard, e.g. a front part of the vehicle); if the first received strength indication signal value is greater than the first threshold, the smart key determines that it is close to the first region (a part of the vehicle remote from the dashboard, e.g. a rear part of the vehicle).

### Description of the accompanying drawings

Fig. 1 shows a schematic diagram of a vehicle, wherein a second antenna and a first antenna are arranged in the vehicle;
Fig. 2 shows a schematic timing diagram for the sending of packets by the second antenna and first antenna in the CID identification process.

### Particular embodiments

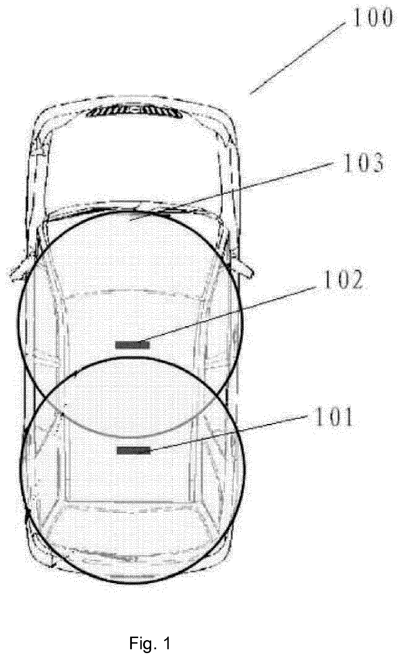

Fig. 1 shows a schematic diagram of a vehicle 100, wherein a first antenna 101 and a second antenna 102 are arranged in the vehicle 100. The second antenna 102 is arranged in a front part of the vehicle 100, closer to a dashboard 103 of the vehicle; the first antenna 101 is arranged in a rear part of the vehicle 100, i.e. further from the dashboard 103 of the vehicle.

The first antenna 101 and second antenna 102 transmit a first signal and a second signal, respectively. The second antenna 102 is closer to the vehicle dashboard, so may receive a higher level of electronic interference; the first antenna 101 is further from the vehicle dashboard, so may receive a lower level of electronic interference. In an embodiment according to the present invention, the power of the second antenna 102 is increased, such that the power of the second antenna 102 is greater than the power of the first antenna 101, so that the signal transmitted by the second antenna 102 close to the dashboard can be immune to dashboard noise, while the signal transmitted by the first antenna 101 far from the dashboard can stay at a low level so as to save power consumption.

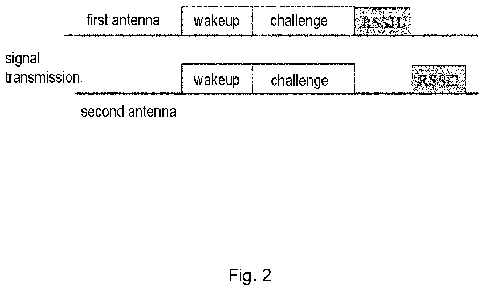

Fig. 2 shows a schematic timing diagram for the sending of packets by the second antenna 102 and first antenna 101 in the CID identification process. The packet sending processes of the first antenna 101 and second antenna 102 are substantially similar; the packet sending process of the first antenna 101 is explained in detail below as an example.

Signals transmitted by the first antenna 101 include a "wakeup" signal, a "challenge" signal and a strength indication signal, which are explained in detail below.

First of all, the user carries a smart key and presses a trigger button or a one-button-start button, such that the ECU in the vehicle is activated, and enters an operational state. The ECU commands the first antenna 101 to emit a "wakeup" packet to wake up the smart key, such that the smart key matched to the vehicle is woken up.

Next, once the smart key has been woken up, the ECU commands the first antenna 101 to emit a "challenge" packet, to perform match verification of an identity code (CID) with the smart key.

Next, the ECU commands the first antenna 101 to emit a first strength indication signal RSSI1. Preferably, the first strength indication signal RSSI1 is a pure signal that has not been modulated, i.e. the first strength indication signal RSSI1 contains only amplitude information and no data information.

The first strength indication signal RSSI1 is received and measured by the smart key, to obtain a first received strength indication signal value RSSI-RX1. The first received strength indication signal value RSSI-RX1 is different from the first strength indication signal RSSI1, and the amplitude of the first received strength indication signal value RSSI-RX1 is attenuated according to the distance between the smart key and the first antenna 101. The first antenna 101 should emit the first strength indication signal RSSI1 for a sufficiently long time for the signal to be able to be measured accurately by the smart key.

Similarly, the second antenna 102 also emits a "wakeup" packet, a "challenge" packet, and a second strength indication signal RSSI2. Moreover, preferably, the second strength indication signal RSSI2 is a pure signal that has not been modulated, i.e. the second strength indication signal RSSI2 contains only amplitude information and no data information. In addition, since the transmission power of the second antenna 102 is higher than the transmission power of the first antenna 101, the amplitude of the second strength indication signal RSSI2 is greater than the amplitude of the first strength indication signal RSSI1. The second strength indication signal is received and measured by the smart key, to obtain a second received strength indication signal value RSSI-RX2. The second received strength indication signal value RSSI-RX2 is different from the second strength indication signal RSSI2, and the amplitude of the second received strength indication signal value RSSI-RX2 is attenuated according to the distance between the smart key and the second antenna 102.

Preferably, the packets or signals emitted by the second antenna 102 and first antenna 101 are low-frequency signals. Referring to Fig. 2, the second antenna 102 and first antenna 101 emit low-frequency signals simultaneously, but the first strength indication signal RSSI1 emitted by the first antenna 101 and the second strength indication signal RSSI2 emitted by the second antenna 102 use different time slots, such that the first strength indication signal RSSI1 and the second strength indication signal RSSI2 are emitted at different moments in time. For example, in a first time slot, the first antenna 101 emits a first strength indication signal RSSI1, whereas the second antenna 102 does not emit a signal; in the second time slot, the second antenna 102 emits a second strength indication signal RSSI2, whereas the first antenna 101 does not emit a signal. The first strength indication signal RSSI1 and second strength indication signal RSSI2 do not overlap in time.

A first threshold TR1 and a second threshold TR2 are stored in the smart key, wherein the first threshold TR1 corresponds to the first strength indication signal RSSI1, and the second threshold TR2 corresponds to the second strength indication signal RSSI2. The amplitude of the second strength indication signal RSSI2 is greater than the amplitude of the first strength indication signal RSSI1, and correspondingly, the second threshold TR2 is greater than the first threshold TR1. The smart key then compares the first and second received strength indication signal values RSSI-RX1 and RSSI-RX2 respectively with the first and second thresholds TR1 and TR2, to determine the position of the smart key.

Specifically, first of all, the smart key compares the second received strength indication signal value RSSI-RX2 with the second threshold TR2. If the second received strength indication signal value RSSI-RX2 exceeds the second threshold TR2, the smart key determines that it is near a second region of the vehicle cabin, i.e. in a position close to the dashboard. However, if the second received strength indication signal value RSSI-RX2 is less than the second threshold TR2, then the smart key compares the first received strength indication signal value RSSI-RX1 with the first threshold TR1. If the first received strength indication signal value RSSI-RX1 exceeds the first threshold TR1, the smart key determines that it is near a first region of the vehicle cabin, i.e. in a position remote from the dashboard.

In the two situations above, the smart key determines that it is in the vehicle cabin. In this case, for example but without limitation, the vehicle ECU will emit a signal for ignition, starting, etc.

Conversely, if the smart key detects that the second received strength indication signal value RSSI-RX2 is less than the second threshold TR2 and the first received strength indication signal value RSSI-RX1 is less than the first threshold TR1, the smart key determines that it is, for example, outside the vehicle cabin. In this case, the vehicle ECU will not emit a control signal for ignition, starting, etc.

Furthermore, alternatively and similarly, the smart key may first of all compare the first received strength indication signal value RSSI-RX1 with the first threshold TR1. If the first received strength indication signal value RSSI-RX1 is less than the first threshold TR1, then the smart key compares the second received strength indication signal value RSSI-RX2 with the second threshold TR2, so as to determine to position of the smart key.

Thus, by disposing the first antenna 101 and second antenna 102 respectively in different regions of the vehicle, and comparing the first and second received strength indication signal values RSSI-RX1 and RSSI-RX2, that are received from the first antenna 101 and second antenna 102 respectively and measured, with the thresholds TR1 and TR2 stored in the smart key, the smart key can accurately determine its position in the vehicle.

In an alternative non-claimed embodiment, in order to achieve more precise positioning of the smart key, it is possible to dispose multiple RSSI mechanisms, i.e. dispose multiple antennas in the vehicle. According to the claimed invention, only the transmission power of an antenna close to the dashboard is increased, while the transmission power of the other antenna remote from the dashboard is still kept at a low level, in order to reduce power consumption while achieving immunity from noise interference. Furthermore, there is a positive correlation between the extent to which an antenna's transmission power is increased and the distance between the antenna and the dashboard or another apparatus which might cause interference, i.e. the closer an antenna is to the dashboard, the greater the extent to which the antenna's transmission power is increased. Thus, the system can reduce power consumption as much as possible while overcoming noise interference from the dashboard.

Furthermore, similarly as an example, multiple antennas emit strength indication signals RSSI1-RSSIn respectively in different time slots. Multiple thresholds TR1-TRn corresponding to strength indication signals transmitted by different antennas are stored in the smart key. Similarly, the smart key respectively compares received strength indication signal values RSSI-RX1 to RSSI-RXn that are received with multiple thresholds TR1-TRn stored in the smart key, so as to precisely determine the position of the smart key.

## Claims

1. Identity code identification system for vehicle passive entry and passive start, comprising:
a first antenna, arranged in a first region of a vehicle and the first region is a rear part of the vehicle, and configured to transmit a first signal;
a second antenna, arranged in a second region of the vehicle and the second region is a front part of the vehicle, and configured to transmit a second signal;
a smart key, configured to interact with the first antenna and the second antenna, to perform verification of a match between the smart key and the vehicle;
wherein the second region is closer than the first region to an electronic interference apparatus of the vehicle and the electronic interference apparatus is a dashboard of the vehicle, and a transmission power of the second antenna is higher than a transmission power of the first antenna
**characterized in that**:
the transmission power of the first antenna is kept at low level and the transmission power of the second antenna is increased based on the distance between the second antenna and the electronic interference apparatus in order to reduce power consumption while achieving immunity from noise interference.

2. Identity code identification system according to Claim 1, wherein
the first signal transmitted by the first antenna comprises a first strength indication signal,
the second signal emitted by the second antenna comprises a second strength indication signal,
wherein the first strength indication signal and second strength indication signal are unmodulated signals, which contain only amplitude information and no data information, and the signal strength of the first strength indication signal is weaker than the signal strength of the second strength indication signal.

3. Identity code identification system according to Claim 1, wherein
the first signal transmitted by the first antenna comprises:
a first wakeup signal, for waking up the smart key, a first challenge signal, for verifying a match with the smart key;
the second signal transmitted by the second antenna comprises:
a second wakeup signal, for waking up the smart key,
a second challenge signal, for verifying a match with the smart key.

4. Identity code identification system according to Claim 2, wherein
the first antenna and the second antenna emit the first signal and the second signal simultaneously,
wherein the first strength indication signal and the second strength indication signal use different time slots, such that the first strength indication signal and the second strength indication signal do not overlap in time.

5. Identity code identification system according to Claim 2, wherein
the smart key is configured to receive and measure the first strength indication signal, so as to obtain a first received strength signal value, and the smart key is configured to receive and measure the second strength indication signal, so as to obtain a second received strength signal value, wherein
a first threshold and a second threshold are stored in the smart key, the first threshold being less than the second threshold,
and the smart key is configured to compare the first received indication signal value with the first threshold, and to compare the second received indication signal value with the second threshold, to determine the position of the smart key.

6. Identity code identification system according to Claim 5, wherein the smart key is configured to:
compare the second received strength indication signal with the second threshold,
if the second received strength indication signal value is greater than the second threshold, the smart key determines that it is close to the second region,
if the second received strength indication signal value is less than the second threshold, then the first strength indication signal is compared with the first threshold:
if the first received strength indication signal value is greater than the first threshold, the smart key determines that it is close to the first region.

7. Identity code identification system according to Claim 6, wherein the smart key is configured such that:
if the second received strength indication signal value is less than the second threshold, and the first received strength indication signal value is less than the first threshold, the smart key determines that it is outside the vehicle.

8. Identity code identification method for vehicle passive entry and passive start, wherein
a first antenna arranged in a first region of a vehicle and the first region is a rear part of the vehicle, emits a first signal;
a second antenna arranged in a second region of the vehicle and the second region is a front part of the vehicle, emits a second signal;
a smart key interacts with the first antenna and the second antenna, to perform verification of a match between the smart key and the vehicle;
wherein the second region is closer than the first region to an electronic interference apparatus of the vehicle and the electronic interference apparatus is a dashboard of the vehicle, and a transmission power of the second antenna is higher than a transmission power of the first antenna
**characterized in that**:
the transmission power of the first antenna is kept at low level and the transmission power of the second antenna is increased based on the distance between the second antenna and the electronic interference apparatus in order to reduce power consumption while achieving immunity from noise interference.

9. Identity code identification method according to Claim 8, wherein
the first signal transmitted by the first antenna comprises a first strength indication signal,
the second signal emitted by the second antenna comprises a second strength indication signal,
wherein the first strength indication signal and second strength indication signal are unmodulated signals, which contain only amplitude information and no data information, and the signal strength of the first strength indication signal is weaker than the signal strength of the second strength indication signal,
the smart key receives and measures the first strength indication signal to obtain a first received strength indication signal value, and receives and measures the second strength indication signal to obtain a second received strength indication signal value,
a first threshold and a second threshold are stored in the smart key, the first threshold being less than the second threshold, and
the smart key is configured to compare the first received indication signal value with the first threshold, and to compare the second received indication signal value with the second threshold, to determine the position of the smart key.

10. Identity code identification method according to Claim 8, wherein
the first signal transmitted by the first antenna comprises:
a first wakeup signal, for waking up the smart key,
a first challenge signal, for verifying a match with the smart key;
the second signal transmitted by the second antenna comprises:
a second wakeup signal, for waking up the smart key,
a second challenge signal, for verifying a match with the smart key.

11. Identity code identification method according to Claim 9, comprising
comparing the second received strength indication signal with the second threshold:
if the second received strength indication signal value is greater than the second threshold, the smart key determines that it is close to the second region,
if the second received strength indication signal value is less than the second threshold, then the first strength indication signal is compared with the first threshold:
if the first received strength indication signal value is greater than the first threshold, the smart key determines that it is close to the first region,
if the second received strength indication signal value is less than the second threshold, and the first received strength indication signal value is less than the first threshold, the smart key determines that it is outside the vehicle.

## Patentansprüche

1. Identitätscodeidentifikationssystem für passiven Einstieg in ein Fahrzeug und passives Starten desselben, das Folgendes umfasst:
eine erste Antenne, die in einem ersten Bereich eines Fahrzeugs angeordnet und dazu ausgelegt ist, ein erstes Signal zu übertragen, wobei der erste Bereich ein hinterer Teil des Fahrzeugs ist;
eine zweite Antenne, die in einem zweiten Bereich des Fahrzeugs angeordnet und dazu ausgelegt ist, ein zweites Signal zu übertragen, wobei der zweite Bereich ein vorderer Teil des Fahrzeugs ist;
einen intelligenten Schlüssel, der dazu ausgelegt ist, mit der ersten Antenne und der zweiten Antenne zu interagieren, um eine Verifizierung einer Übereinstimmung zwischen dem intelligenten Schlüssel und dem Fahrzeug durchzuführen;
wobei der zweite Bereich näher als der erste Bereich zu einer elektronischen Interferenzeinrichtung des Fahrzeugs ist und die elektronische Interferenzeinrichtung ein Armaturenbrett des Fahrzeugs ist und eine Sendeleistung der zweiten Antenne höher ist als eine Sendeleistung der ersten Antenne **dadurch gekennzeichnet, dass**:
die Sendeleistung der ersten Antenne auf einem niedrigen Niveau gehalten wird und die Sendeleistung der zweiten Antenne auf Basis des Abstands zwischen der zweiten Antenne und der elektronischen Interferenzeinrichtung erhöht wird, um den Leistungsverbrauch zu verringern, während eine Immunität gegenüber einer Rauschinterferenz erreicht wird.

2. Identitätscodeidentifikationssystem nach Anspruch 1, wobei
das erste Signal, das von der ersten Antenne übertragen wird, ein erstes Stärkeanzeigesignal umfasst,
das zweite Signal, das von der zweiten Antenne emittiert wird, ein zweites Stärkeanzeigesignal umfasst,
wobei das erste Stärkeanzeigesignal und das zweite Stärkeanzeigesignal nicht modulierte Signale sind, die nur Amplitudeninformationen und keine Dateninformationen enthalten, und die Signalstärke des ersten Stärkeanzeigesignals schwächer ist als die Signalstärke des zweiten Stärkeanzeigesignals.

3. Identitätscodeidentifikationssystem nach Anspruch 1, wobei
das erste Signal, das von der ersten Antenne übertragen wird, Folgendes umfasst:
ein erstes Wecksignal zum Aufwecken des intelligenten Schlüssels, ein erstes Abfragesignal zum Verifizieren einer Übereinstimmung mit dem intelligenten Schlüssel;
das zweite Signal, das von der zweiten Antenne übertragen wird, Folgendes umfasst:
ein zweites Wecksignal zum Aufwecken des intelligenten Schlüssels,
ein zweites Abfragesignal zum Verifizieren einer Übereinstimmung mit dem intelligenten Schlüssel.

4. Identitätscodeidentifikationssystem nach Anspruch 2, wobei
die erste Antenne und die zweite Antenne das erste Signal und das zweite Signal gleichzeitig emittieren,
wobei das erste Stärkeanzeigesignal und das zweite Stärkeanzeigesignal verschiedene Zeitschlitze verwenden, derart, dass das erste Stärkeanzeigesignal und das zweite Stärkeanzeigesignal sich in der Zeit nicht überlappen.

5. Identitätscodeidentifikationssystem nach Anspruch 2, wobei
der intelligente Schlüssel dazu ausgelegt ist, das erste Stärkeanzeigesignal zu empfangen und zu messen, um einen ersten Empfangssignalstärkewert zu erhalten, und der intelligente Schlüssel dazu ausgelegt ist, das zweite Stärkeanzeigesignal zu empfangen und zu messen, um einen zweiten Empfangssignalstärkewert zu erhalten, wobei im intelligenten Schlüssel ein erster Schwellwert und ein zweiter Schwellwert gespeichert sind, wobei der erste Schwellwert kleiner ist als der zweite Schwellwert,
und der intelligente Schlüssel dazu ausgelegt ist, den ersten Empfangssignalanzeigewert mit dem ersten Schwellwert zu vergleichen und den zweiten Empfangssignalanzeigewert mit dem zweiten Schwellwert zu vergleichen, um die Position des intelligenten Schlüssels zu bestimmen.

6. Identitätscodeidentifikationssystem nach Anspruch 5, wobei der intelligente Schlüssel zu Folgendem ausgelegt ist:
Vergleichen des zweiten empfangenen Stärkeanzeigesignals mit dem zweiten Schwellwert,
wenn der Wert des zweiten empfangenen Stärkeanzeigesignals größer ist als der zweite Schwellwert, bestimmt der intelligente Schlüssel, dass er sich in der Nähe des zweiten Bereichs befindet,
wenn der Wert des zweiten empfangenen Stärkeanzeigesignals kleiner ist als der zweite Schwellwert, wird das erste Stärkeanzeigesignal mit dem ersten Schwellwert verglichen:
wenn der Wert des ersten empfangenen Stärkeanzeigesignals größer ist als der erste Schwellwert, bestimmt der intelligente Schlüssel, dass er sich in der Nähe des ersten Bereichs befindet.

7. Identitätscodeidentifikationssystem nach Anspruch 6, wobei der intelligente Schlüssel derart ausgelegt ist, dass:
wenn der Wert des zweiten empfangenen Stärkeanzeigesignals kleiner ist als der zweite Schwellwert und der Wert des ersten empfangenen Stärkeanzeigesignals kleiner ist als der erste Schwellwert, der intelligente Schlüssel bestimmt, dass er sich außerhalb des Fahrzeugs befindet.

8. Identitätscodeidentifikationsverfahren für passiven Einstieg in ein Fahrzeug und passives Starten desselben, wobei
eine erste Antenne, die in einem ersten Bereich eines Fahrzeugs angeordnet ist, ein erstes Signal emittiert, wobei der erste Bereich ein hinterer Teil des Fahrzeugs ist;
eine zweite Antenne, die in einem zweiten Bereich des Fahrzeugs angeordnet ist, ein zweites Signal emittiert, wobei der zweite Bereich ein vorderer Teil des Fahrzeugs ist;
ein intelligenter Schlüssel mit der ersten Antenne und der zweiten Antenne interagiert, um eine Verifizierung einer Übereinstimmung zwischen dem intelligenten Schlüssel und dem Fahrzeug durchzuführen;
wobei der zweite Bereich näher als der erste Bereich zu einer elektronischen Interferenzeinrichtung des Fahrzeugs ist und die elektronische Interferenzeinrichtung ein Armaturenbrett des Fahrzeugs ist und eine Sendeleistung der zweiten Antenne höher ist als eine Sendeleistung der ersten Antenne
**dadurch gekennzeichnet, dass**:
die Sendeleistung der ersten Antenne auf einem niedrigen Niveau gehalten wird und die Sendeleistung der zweiten Antenne auf Basis des Abstands zwischen der zweiten Antenne und der elektronischen Interferenzeinrichtung erhöht wird, um den Leistungsverbrauch zu verringern, während eine Immunität gegenüber einer Rauschinterferenz erreicht wird.

9. Identitätscodeidentifikationsverfahren nach Anspruch 8, wobei
das erste Signal, das von der ersten Antenne übertragen wird, ein erstes Stärkeanzeigesignal umfasst,
das zweite Signal, das von der zweiten Antenne emittiert wird, ein zweites Stärkeanzeigesignal umfasst,
wobei das erste Stärkeanzeigesignal und das zweite Stärkeanzeigesignal nicht modulierte Signale sind, die nur Amplitudeninformationen und keine Dateninformationen enthalten, und die Signalstärke des ersten Stärkeanzeigesignals schwächer ist als die Signalstärke des zweiten Stärkeanzeigesignals,
der intelligente Schlüssel das erste Stärkeanzeigesignal empfängt und misst, um einen ersten Wert des empfangenen Stärkeanzeigesignals zu erhalten, und das zweite Stärkeanzeigesignal empfängt und misst, um einen zweiten Wert des empfangenen Stärkeanzeigesignals zu erhalten,
im intelligenten Schlüssel ein erster Schwellwert und ein zweiter Schwellwert gespeichert sind, wobei der erste Schwellwert kleiner ist als der zweite Schwellwert, und der intelligente Schlüssel dazu ausgelegt ist, den ersten Empfangssignalanzeigewert mit dem ersten Schwellwert zu vergleichen und den zweiten Empfangssignalanzeigewert mit dem zweiten Schwellwert zu vergleichen, um die Position des intelligenten Schlüssels zu bestimmen.

10. Identitätscodeidentifikationsverfahren nach Anspruch 8, wobei
das erste Signal, das von der ersten Antenne übertragen wird, Folgendes umfasst:
ein erstes Wecksignal zum Aufwecken des intelligenten Schlüssels,
ein erstes Abfragesignal zum Verifizieren einer Übereinstimmung mit dem intelligenten Schlüssel;
das zweite Signal, das von der zweiten Antenne übertragen wird, Folgendes umfasst:
ein zweites Wecksignal zum Aufwecken des intelligenten Schlüssels,
ein zweites Abfragesignal zum Verifizieren einer Übereinstimmung mit dem intelligenten Schlüssel.

11. Identitätscodeidentifikationsverfahren nach Anspruch 9, das das Vergleichen des zweiten empfangenen Stärkeanzeigesignals mit dem zweiten Schwellwert umfasst:
wenn der Wert des zweiten empfangenen Stärkeanzeigesignals größer ist als der zweite Schwellwert, bestimmt der intelligente Schlüssel, dass er sich in der Nähe des zweiten Bereichs befindet,
wenn der Wert des zweiten empfangenen Stärkeanzeigesignals kleiner ist als der zweite Schwellwert, wird das erste Stärkeanzeigesignal mit dem ersten Schwellwert verglichen:
wenn der Wert des ersten empfangenen Stärkeanzeigesignals größer ist als der erste Schwellwert, bestimmt der intelligente Schlüssel, dass er sich in der Nähe des ersten Bereichs befindet,
wenn der Wert des zweiten empfangenen Stärkeanzeigesignals kleiner ist als der zweite Schwellwert und der Wert des ersten empfangenen Stärkeanzeigesignals kleiner ist als der erste Schwellwert, der intelligente Schlüssel bestimmt, dass er sich außerhalb des Fahrzeugs befindet.

## Revendications

1. Système d'identification de code d'identité pour une entrée passive de véhicule et un démarrage passif, comprenant :
une première antenne, agencée dans une première région d'un véhicule et la première région est une partie arrière du véhicule, et configurée pour transmettre un premier signal ;
une deuxième antenne, agencée dans une deuxième région du véhicule et la deuxième région est une partie avant du véhicule, et configurée pour transmettre un deuxième signal ;
une clé intelligente, configurée pour interagir avec la première antenne et la deuxième antenne, afin de réaliser une vérification d'une correspondance entre la clé intelligente et le véhicule ;
la deuxième région étant plus proche que la première région d'un appareil d'interférence électronique du véhicule et l'appareil d'interférence électronique étant un tableau de bord du véhicule, et une puissance de transmission de la deuxième antenne étant supérieure à une puissance de transmission de la première antenne
**caractérisé en ce que** :
la puissance de transmission de la première antenne est maintenue à un niveau bas et la puissance de transmission de la deuxième antenne est augmentée sur la base de la distance entre la deuxième antenne et l'appareil d'interférence électronique afin de réduire la consommation d'énergie tout en obtenant une immunité par rapport à une interférence de bruit.

2. Système d'identification de code d'identité selon la revendication 1, dans lequel
le premier signal transmis par la première antenne comprend un premier signal d'indication d'intensité,
le deuxième signal émis par la deuxième antenne comprend un deuxième signal d'indication d'intensité,
le premier signal d'indication d'intensité et le deuxième signal d'indication d'intensité étant des signaux non modulés, qui contiennent uniquement des informations d'amplitude et aucune information de données, et l'intensité de signal du premier signal d'indication d'intensité étant plus faible que l'intensité de signal du deuxième signal d'indication d'intensité.

3. Système d'identification de code d'identité selon la revendication 1, dans lequel
le premier signal transmis par la première antenne comprend :
un premier signal de réveil, pour réveiller la clé intelligente, un premier signal de défi, pour vérifier une correspondance avec la clé intelligente ;
le deuxième signal transmis par la deuxième antenne comprend :
un deuxième signal de réveil, pour réveiller la clé intelligente,
un deuxième signal de défi, pour vérifier une correspondance avec la clé intelligente.

4. Système d'identification de code d'identité selon la revendication 2, dans lequel
la première antenne et la deuxième antenne émettent simultanément le premier signal et le deuxième signal, dans lequel le premier signal d'indication d'intensité et le deuxième signal d'indication d'intensité utilisent différents intervalles de temps, de telle sorte que le premier signal d'indication d'intensité et le deuxième signal d'indication d'intensité ne se chevauchent pas dans le temps.

5. Système d'identification de code d'identité selon la revendication 2, dans lequel
la clé intelligente est configurée pour recevoir et mesurer le premier signal d'indication d'intensité, de sorte à obtenir une première valeur de signal d'intensité reçue, et la clé intelligente est configurée pour recevoir et mesurer le deuxième signal d'indication d'intensité, de sorte à obtenir une deuxième valeur de signal d'intensité reçue, dans lequel
un premier seuil et un deuxième seuil sont stockés dans la clé intelligente, le premier seuil étant inférieur au deuxième seuil,
et la clé intelligente est configurée pour comparer la première valeur de signal d'indication reçue au premier seuil, et pour comparer la deuxième valeur de signal d'indication reçue au deuxième seuil, afin de déterminer la position de la clé intelligente.

6. Système d'identification de code d'identité selon la revendication 5, dans lequel la clé intelligente est configurée pour :
comparer le deuxième signal d'indication d'intensité reçu au deuxième seuil,
si la deuxième valeur de signal d'indication d'intensité reçue est supérieure au deuxième seuil, la clé intelligente détermine qu'elle est proche de la deuxième région,
si la deuxième valeur de signal d'indication d'intensité reçue est inférieure au deuxième seuil, alors le premier signal d'indication d'intensité est comparé au premier seuil :
si la première valeur de signal d'indication d'intensité reçue est supérieure au premier seuil, la clé intelligente détermine qu'elle est proche de la première région.

7. Système d'identification de code d'identité selon la revendication 6, dans lequel la clé intelligente est configurée de telle sorte que :
si la deuxième valeur de signal d'indication d'intensité reçue est inférieure au deuxième seuil, et que la première valeur de signal d'indication d'intensité reçue est inférieure au premier seuil, la clé intelligente détermine qu'elle se trouve à l'extérieur du véhicule.

8. Système d'identification de code d'identité pour une entrée passive de véhicule et un démarrage passif, dans lequel
une première antenne agencée dans une première région d'un véhicule et la première région est une partie arrière du véhicule, émet un premier signal ;
une deuxième antenne agencée dans une deuxième région du véhicule et la deuxième région étant une partie avant du véhicule, émet un deuxième signal ;
une clé intelligente interagit avec la première antenne et la deuxième antenne, pour réaliser une vérification d'une correspondance entre la clé intelligente et le véhicule ;
la deuxième région étant plus proche que la première région d'un appareil d'interférence électronique du véhicule et l'appareil d'interférence électronique étant un tableau de bord du véhicule, et une puissance de transmission de la deuxième antenne étant supérieure à une puissance de transmission de la première antenne **caractérisé en ce que** :
la puissance de transmission de la première antenne est maintenue à un niveau bas et la puissance de transmission de la deuxième antenne est augmentée sur la base de la distance entre la deuxième antenne et l'appareil d'interférence électronique afin de réduire la consommation d'énergie tout en obtenant une immunité par rapport à une interférence de bruit.

9. Procédé d'identification de code d'identité selon la revendication 8, dans lequel
le premier signal transmis par la première antenne comprend un premier signal d'indication d'intensité,
le deuxième signal émis par la deuxième antenne comprend un deuxième signal d'indication d'intensité,
le premier signal d'indication d'intensité et le deuxième signal d'indication d'intensité étant des signaux non modulés, qui contiennent uniquement des informations d'amplitude et aucune information de données, et l'intensité de signal du premier signal d'indication d'intensité étant plus faible que l'intensité de signal du deuxième signal d'indication d'intensité,
la clé intelligente reçoit et mesure le premier signal d'indication d'intensité pour obtenir une première valeur de signal d'intensité reçue, et reçoit et mesure le deuxième signal d'indication d'intensité afin d'obtenir une deuxième valeur de signal d'intensité reçue,
un premier seuil et un deuxième seuil sont stockés dans la clé intelligente, le premier seuil étant inférieur au deuxième seuil, et
la clé intelligente est configurée pour comparer la première valeur de signal d'indication reçue au premier seuil, et pour comparer la deuxième valeur de signal d'indication reçue au deuxième seuil, afin de déterminer la position de la clé intelligente.

10. Procédé d'identification de code d'identité selon la revendication 8, dans lequel
le premier signal émis par la première antenne comprend :
un premier signal de réveil, pour réveiller la clé intelligente,
un premier signal de défi, pour vérifier une correspondance avec la clé intelligente ;
le deuxième signal transmis par la deuxième antenne comprend :
un deuxième signal de réveil, pour réveiller la clé intelligente,
un deuxième signal de défi, pour vérifier une correspondance avec la clé intelligente.

11. Procédé d'identification de code d'identité selon la revendication 9, comprenant la comparaison du deuxième signal d'indication d'intensité reçu au deuxième seuil :
si la deuxième valeur de signal d'indication d'intensité reçue est supérieure au deuxième seuil, la clé intelligente détermine qu'elle est proche de la deuxième région,
si la deuxième valeur de signal d'indication d'intensité reçue est inférieure au deuxième seuil, alors le premier signal d'indication d'intensité est comparé au premier seuil :
si la première valeur de signal d'indication d'intensité reçue est supérieure au premier seuil, la clé intelligente détermine qu'elle est proche de la première région,
si la deuxième valeur de signal d'indication d'intensité reçue est inférieure au deuxième seuil, et que la première valeur de signal d'indication d'intensité reçue est inférieure au premier seuil, la clé intelligente détermine qu'elle se trouve à l'extérieur du véhicule.
